# EUROPÄISCHE PATENTANMELDUNG

(11) **EP 3 501 805 A1**
(43) Veröffentlichungstag der Anmeldung: **26.06.2019**
(21) Anmeldenummer: 18214755.3
(22) Anmeldetag: 20.12.2018
(51) Int. Cl.: B29C 70/40, B29C 33/38

(54) **WERKZEUG ZUR VERWENDUNG BEI EINER KONSOLIDIERUNG EINES FASERVERSTÄRKTEN BAUTEILS**

(30) Priorität: 22.12.2017 DE 102017131201
(71) Anmelder: Airbus Operations GmbH, 21129 Hamburg (DE)
(72) Erfinder: Hanske, Claus, 21129 Hamburg (DE); Leohold, Benjamin, 21129 Hamburg (DE); Hinz, Remo, 21129 Hamburg (DE); Kluge, Albrecht, 21129 Hamburg (DE)
(74) Vertreter: Bird & Bird LLP

(57) **Zusammenfassung**

Dargestellt und beansprucht wird ein Werkzeug (1) zur Verwendung bei einer Konsolidierung eines faserverstärkten Bauteils (3), wobei das Werkzeug (1) eine äußere Umhüllung (5) aufweist, die von einer inneren Struktur (9) gestützt wird. Die äußere Umhüllung (5) weist eine erste Anlagefläche (7) auf, die dazu vorgesehen ist, während der Konsolidierung des Bauteils (3) flächig an dem Bauteil (3) anzuliegen und eine Form des Bauteils (3) abschnittsweise vorzugeben. Die innere Struktur (9) und die äußere Umhüllung (5) so ausgestaltet sind, dass sich das Werkzeug (1) bei einer Erwärmung des Werkzeugs (1) von einer Ausgangstemperatur auf eine zur Konsolidierung des Bauteils benötigte Konsolidierungstemperatur senkrecht zur ersten Anlagefläche (7) derart ausdehnt, dass durch die erste Anlagefläche (7) ein definierter erster Druck auf das Bauteil (3) ausgeübt wird. Weiterhin wird die Verwendung eines solches Werkzeugs (3) beansprucht und beschrieben.

## Beschreibung

Die vorliegende Erfindung betrifft ein Werkzeug zur Verwendung bei einer Konsolidierung eines faserverstärkten Bauteils. Weiterhin betrifft die Erfindung die Verwendung eines solchen Werkzeugs.

Faserverstärkte Bauteile sind Bauteile aus Faserverbundwerkstoffen. Letztere bestehen im Allgemeinen aus zwei Hauptkomponenten: einer Matrix sowie in die Matrix eingebetteten Verstärkungsfasern. Im Flugzeugbau ist beispielsweise die Verwendung von Kohlenstofffasern gängig, die in eine Matrix aus einem Harz eingebettet werden. Um ein Bauteil aus einem Faserverbundwerkstoff auszuhärten, wird dieses gleichzeitig mit Wärme und Druck beaufschlagt. Durch die Wärme wird das Harz je nach Materialart ausgehärtet (Harze bzw. Matrizen aus Durplasten oder Duromeren, nachfolgend kurz als Thermosetmatrizen bezeichnet) bzw. soweit erwärmt, dass es konsolidiert werden kann (Harze bzw. Matrizen aus thermoplastischen Materialien, nachfolgend kurz als Thermoplastmatrizen bezeichnet), während durch den Druck die Kompaktierung eingestellt werden wird (Thermoset- und Thermoplastmatrizen). Die Kompaktierung hat wiederum Einfluss auf die innere Qualität des Bauteils (z.B. Harzverteilung, Faservolumengehalt, Lufteinschlüsse, Verschiebung oder Welligkeiten der Faserorientierung). Da vom Faser-Harz-Verhältnis die Festig- und Steifigkeitseigenschaften des fertiggestellten Bauteils entscheidend abhängen und Lufteinschlüsse die Festig- und Steifigkeitseigenschaften negativ verändern, muss der Druck genau kontrolliert werden. Bei den bekannten Faserverbundbauteilen mit Duroplastharzen (Thermosetmatrizen) kann der Druck unter anderem durch die thermische Ausdehnung von den formgebenden Werkzeugen (z.B. Druckkernen) erzeugt werden, mit denen die Form der Bauteile vorgegeben wird.

Ein breitangelegter Einsatz von faserverstärkten Bauteilen wird zurzeit teilweise durch die hohen Kosten für die Bauteile verhindert. Die Kosten für die Bauteile können unter anderem dadurch gesenkt werden, in dem man Matrizen aus günstigeren thermoplastischen Materialien verwendet. Die Verarbeitung solcher Matrizen wird jedoch dadurch erschwert, dass die Thermoplastmatrizen erst bei deutlich höheren Temperaturen umgeformt und konsolidiert werden können als die Temperaturen, bei denen Thermosetmatrizen aushärten. Beispielsweise härten gegenwärtig verwendete Duroplastharze bereits bei einer Temperatur von ungefähr 120°C - 180°C aus, während geeignete thermoplastische Materialien erst bei einer Konsolidierungstemperatur von ungefähr 340°C - 400°C umgeformt und verarbeitet werden können.

Aufgrund der höheren Konsolidierungstemperatur können daher die Verfahren, die bisher für Bauteile mit Thermosetmatrizen verwendet wurden, nur eingeschränkt für Bauteile mit Thermoplastmatrizen übernommen werden. Insbesondere können viele Materialien für Formgebungswerkzeuge, die bei faserverstärkten Bauteilen mit Thermosetmatrizen verwendet werden, nicht bei der Konsolidierung von faserverstärkten Bauteilen mit Thermoplastmatrizen eingesetzt werden. Denn wenn man die Formgebungswerkzeuge statt auf 180°C bis auf 400°C erwärmt, dehnen diese sich abhängig vom Material viel stärker aus. Dies kann zu Überpressungen im Bauteil und auch zu Schäden am Fertigungsmittel führen.

Es ist daher eine Aufgabe der vorliegenden Erfindung, Werkzeuge oder Kerne bereitzustellen, die bei der Konsolidierung von faserverstärkten Bauteilen und vorzugsweise von faserverstärkten Bauteilen mit Matrizen aus thermoplastischen Materialien verwendet werden können.

Die Aufgabe wird gelöst durch ein Werkzeug nach Anspruch 1 sowie die Verwendung eines erfindungsgemäßen Werkzeugs nach Anspruch 8. Vorteilhafte Weiterbildungen der Erfindung sind in den abhängigen Ansprüchen beschrieben.

In einem ersten Aspekt wird die Aufgabe durch ein Werkzeug zur Verwendung bei einer Konsolidierung eines faserverstärkten Bauteils gelöst. Das faserverstärkte Bauteil weist vorzugsweise eine Matrix aus einem thermoplastischen Material auf, die auch als Thermoplastmatrix bezeichnet wird. Das Werkzeug kann aber auch bei der Herstellung eines faserverstärkten Bauteils mit Matrizen aus Duroplasten bzw. Duromeren verwendet werden. Solche Matrizen werden nachfolgend als Thermosetmatrizen bezeichnet. Das Werkzeug weist eine äußere Hülle auf, die von einer inneren Struktur gestützt wird. Die äußere Hülle weist eine erste Anlagefläche auf, die dazu vorgesehen ist, während der Konsolidierung des Bauteils flächig an dem Bauteil anzuliegen und eine Form des Bauteils zumindest abschnittsweise vorzugeben. Die innere Struktur und die äußere Hülle sind so ausgestaltet, dass sich das Werkzeug bei einer Erwärmung des Werkzeugs von einer Ausgangstemperatur auf eine zur Konsolidierung des Bauteils benötigte Konsolidierungstemperatur derart senkrecht zur ersten Anlagefläche ausdehnt, dass durch die erste Anlagefläche ein definierter erster Druck auf das Bauteil ausgeübt wird.

Das erfindungsgemäße Werkzeug, das auch als Kern oder Druckkern bezeichnet wird, umfasst eine äußere Hülle oder Umhüllung und eine innere Struktur. Die äußere Hülle kann teilweise oder ganz geschlossen sein. Mit anderen Worten umschließt sie die innere Struktur in Form eines Gehäuses. Sie ist aber nicht notwendiger Weise vollständig geschlossen, kann also auch Öffnungen aufweisen. Die innere Struktur ist im Inneren des Gehäuses angeordnet, dass von der äußeren Hülle gebildet wird. Zudem ist die innere Struktur dazu vorgesehen, die äußere Hülle zu stützen, also auf die Hülle einwirkende Lasten aufzunehmen und zu verteilen.

Ein Teil der äußeren Hülle bildet eine erste Anlagefläche. Mit dieser wird bei Verwendung des Werkzeugs beim Konsolidieren eines faserverstärkten Bauteils das Bauteil zumindest abschnittweise geformt und Druck von dem Werkzeug auf das Bauteil ausgeübt. Ein Werkzeug kann eine oder mehrere Anlageflächen aufweisen.

Schließlich sind die äußere Umhüllung und die innere Struktur des Werkzeugs so ausgestaltet, dass sich das Werkzeug während der Konsolidierung in Richtung der ersten Anlagefläche genau soweit ausdehnt, dass der für die Konsolidierung des Bauteils benötigte Druck auf das faserverstärkte Bauteil ausgeübt wird. Als Konsolidierungstemperatur wird abhängig vom für die Matrix des faserverstärkten Bauteils verwendeten Materials entweder die Aushärtungstemperatur bezeichnet (Thermosetmatrizen) oder die Temperatur, bei der die Matrix konsolidiert werden kann (Thermoplastmatrizen). Da die Temperaturdifferenz zwischen der Ausgangstemperatur, beispielsweise Raumtemperatur, und der Konsolidierungstemperatur des jeweiligen Bauteils nicht verändert werden kann, sieht die Erfindung vor, die innere Struktur und die äußere Hülle des Bauteils so anzupassen, dass sich das Werkzeug beim Erwärmen auf die Konsolidierungstemperatur nicht stärker als benötigt ausdehnt, damit kein zu hoher Druck auf das Bauteil ausgeübt wird. Die innere Struktur und die äußere Hülle werden aber gleichzeitig auch so gewählt, dass sich das Werkzeug ausreichend stark ausdehnt, um einen ausreichend hohen Druck auf das Bauteil auszuüben.

Die Ausdehnung des Werkzeugs kann insbesondere über die Gestaltung der inneren Struktur des Werkzeugs kontrolliert werden. Dabei gilt zunächst grundsätzlich die Annahme, dass ein massiveres Werkzeug sich stärker ausdehnt und damit auch einen höheren Druck erzeugt. Je weniger Druck benötigt wird, umso leichter kann das Bauteil ausfallen. Um dennoch für ausreichende Stabilität zu sorgen, kann die innere Struktur beispielsweise waben- oder fachwerkförmig ausgebildet sein. Auch komplexe Strukturen sind denkbar.

Die innere Struktur wird vorzugweise zumindest abschnittweise aus unterschiedlichen Materialien mit verschiedenen Wärmeausdehnungskoeffizienten derart gebildet, dass die Ausdehnung des Werkzeugs senkrecht zur ersten Anlagefläche bei der Erwärmung des Werkzeugs von der Ausgangstemperatur auf die Konsolidierungstemperatur von den unterschiedlichen Materialien der inneren Struktur abhängt.

Beispielsweise kann die Struktur abschnittsweise aus einen Material mit einem hohen Wärmeausdehnungskoeffizienten und abschnittsweise aus einem Material mit einem niedrigen Wärmeausdehnungskoeffizienten gebildet werden. Durch das Verhältnis der beiden Materialien an der inneren Struktur kann die Ausdehnung der inneren Struktur und damit der Druck gesteuert werden, der von dem Werkzeug auf das Bauteil ausgeübt wird. Da die innere Struktur im Verhältnis zur Dicke der äußeren Umhüllung senkrecht zur ersten Anlagefläche große Abmessung aufweist, kann über die Auswahl von Anteilen von geeigneten Materialien insbesondere eine Einstellung der Größenordnung des Drucks vorgenommen werden.

Alternativ oder zusätzlich ist es bevorzugt, wenn die äußere Umhüllung im Bereich der ersten Anlagefläche aus mehreren Schichten gebildet ist, die sich parallel zur Anlagefläche erstrecken, wobei zumindest zwei der mehreren Schichten aus unterschiedlichen Materialien gebildet sind, die verschiedene Wärmeausdehnungskoeffizienten aufweisen, so dass die Ausdehnung des Werkzeugs senkrecht zur ersten Anlagefläche bei der Erwärmung des Werkzeugs von der Ausgangstemperatur auf die Konsolidierungstemperatur von den unterschiedlichen Materialien der äußeren Umhüllung und einer Dicke der Schicht senkrecht zur ersten Anlagefläche abhängt.

Dies hat den Vorteil, dass die Ausdehnung des Werkzeugs direkt in der Umhüllung verändert werden kann und eignet sich insbesondere, um den Druck genau einzustellen, da die Dicke der äußeren Umhüllung senkrecht zur ersten Anlagefläche regelmäßig geringer ist als die Abmessungen der inneren Struktur. Zudem kann der Druck über die gesamte Anlagefläche eingestellt und variiert werden.

In einer bevorzugten Ausführungsform weist die äußere Umhüllung eine zweite Anlagefläche auf, die dazu vorgesehen ist, während der Konsolidierung des Bauteils flächig an dem Bauteil anzuliegen und eine Form des Bauteils abschnittsweise vorzugeben, wobei die innere Struktur und die äußere Hülle so ausgestaltet sind, dass sich bei der Erwärmung des Werkzeugs von der Ausgangstemperatur auf die Konsolidierungstemperatur das Werkzeug derart senkrecht zur zweiten Anlagefläche ausdehnt, dass durch die zweite Anlagefläche ein definierter zweiter Druck auf das Bauteil ausgeübt wird, wobei der erste Druck und der zweite Druck unterschiedlich groß sind. Ebenfalls ist es möglich, mehr als zwei Anlageflächen am Werkzeug vorzusehen, von denen jede einen anderen Druck auf das Bauteil bei Erwärmung auf die Konsolidierungstemperatur ausübt.

In der bevorzugten Ausführungsform kann somit der von dem Werkzeug auf das Bauteil ausgeübte Druck für zwei Anlageflächen unterschiedlich eingestellt werden. Die Einstellung kann vorzugweise über den Aufbau und die Ausgestaltung der inneren Struktur erfolgen. Damit wird insbesondere ermöglicht, in einem Bauteil mit einem Kern bzw. Werkzeug unterschiedliche Drücke zu erzeugen. Damit können verschiedene Bereiche eines Bauteils unterschiedlich belastbar aber auch unterschiedlich dicht hergestellt werden, wodurch das Gesamtgewicht des Bauteils sinkt, da nicht mehr der robusteste Abschnitt des Bauteils den Druck vorgibt.

Vorzugsweise weist die äußere Hülle im Bereich der ersten Anlagefläche senkrecht zur ersten Anlagefläche eine Dicke auf, die von einer Dicke der äußeren Hülle senkrecht zur zweiten Anlagefläche im Bereich der zweiten Anlagefläche abweicht, so dass sich das Werkzeug aufgrund der unterschiedlichen Dicke der äußeren Hülle im Bereich der ersten und der zweiten Anlagefläche bei einer Erwärmung von der Ausgangstemperatur auf die Konsolidierungstemperatur senkrecht zur ersten Anlagefläche unterschiedlich stark ausdehnt als senkrecht zur zweiten Anlagefläche. Vorzugsweise lässt sich dabei die Ausdehnung des Werkzeugs parallel zu der Anlagefläche von der ersten und der zweiten Anlagefläche, die eine geringere Dicke aufweist, mit geringerem Aufwand blockieren als die Ausdehnung des Werkzeugs parallel zu der Anlagefläche von der ersten und der zweiten Anlagefläche, die eine größere Dicke aufweist.

Alternativ oder zusätzlich zur Konstruktion der inneren Struktur, ist es somit auch möglich, die erste und zweite Anlagefläche unterschiedlich dick herzustellen. Bei ansonsten gleichen Materialien (oder Materialmischungen) kann über die Dicke der Umhüllung die thermische Ausdehnung und damit der Druck kontrolliert werden.

Es ist weiterhin bevorzugt, dass die innere Struktur aus unterschiedlichen Materialien mit verschiedenen Wärmeausdehnungskoeffizienten gebildet ist, so dass sich das Werkzeug aufgrund der Materialien mit unterschiedlichen Wärmeausdehnungskoeffizienten bei einer Erwärmung von der Ausgangstemperatur auf die Konsolidierungstemperatur senkrecht zur ersten Anlagefläche unterschiedlich stark ausdehnt als senkrecht zur zweiten Anlagefläche. Ebenfalls ist es möglich, die innere Struktur abschnittsweise aus Materialien mit unterschiedlichen Wärmeausdehnungskoeffizienten zu bilden und so den Druck, der von den unterschiedlichen Anlageflächen ausgeübt wird, zu kontrollieren.

In einer bevorzugten Ausführungsform sind die innere Struktur und/oder die äußere Hülle mit einem generativen Fertigungsverfahren hergestellt worden. Beispielsweise kann das Werkzeug oder zumindest ein Teil des Werkzeugs mit einem 3D-Druckverfahren hergestellt werden.

In einem zweiten Aspekt wird die der Erfindung zugrundeliegende Aufgabe durch die Verwendung eines Werkzeugs nach einer der vorhergehenden Ausführungsformen bei einer Konsolidierung eines faserverstärkten Bauteils gelöst. Vorzugsweise wird das Werkzeug bei der Konsolidierung eines faserverstärkten Bauteils mit einer Matrix aus einem thermoplastischen Material verwendet. Die Vorteile der erfindungsgemäßen Verwendung entsprechen den Vorteilen des Werkzeugs, dass Verwendung findet.

Die vorliegende Erfindung wird nachfolgend anhand der Ausführungsbeispiel zeigenden Figuren näher erläutert, wobei
- Figur 1a: eine Mehrzahl von Ausführungsformen von erfindungsgemäßen Werkzeugen zeigt,
- Figur 1b: eine Mehrzahl von Ausführungsformen von erfindungsgemäßen Werkzeugen zeigt, die zur Konsolidierung eines faserverstärkten Bauteils verwendet werden,
- Figur 1c: ein unter Verwendung der Werkzeuge aus Figur 1b hergestelltes faserverstärktes Bauteil zeigt,
- Figuren 2a bis 2d: Schnittansichten von Ausführungsformen von erfindungsgemäßen Werkzeugen zeigen und
- Figuren 3a bis 3c: beispielhafte Ausführungsformen von inneren Strukturen für erfindungsgemäße Werkzeuge zeigen.

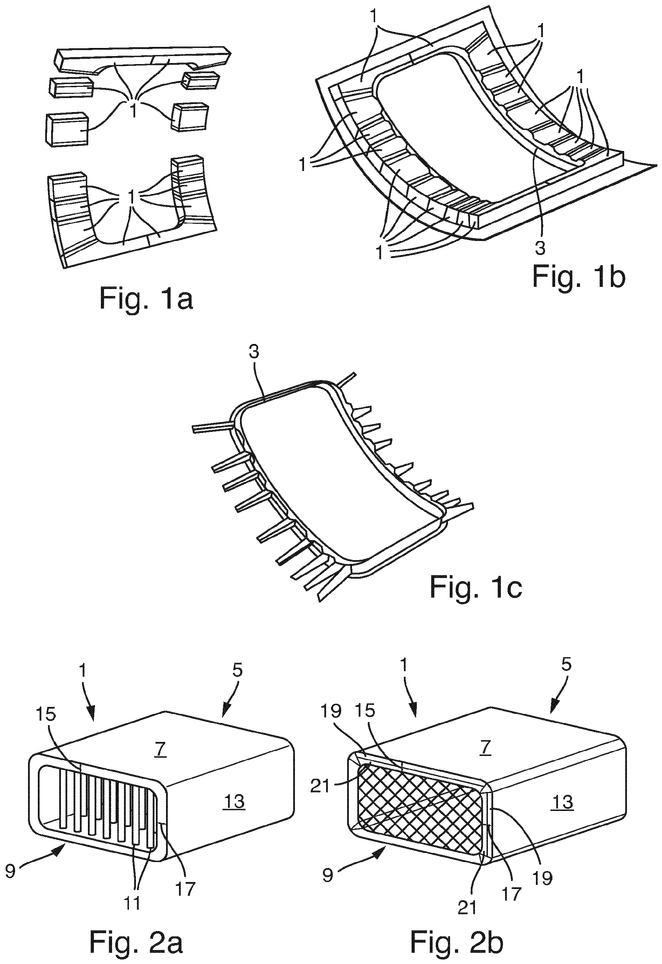

Figur 1a zeigt eine Mehrzahl von beispielhaften Ausführungsformen von Werkzeugen oder Kernen 1, die bei der Konsolidierung eines faserverstärkten Bauteils, also einem Bauteil aus einem Faserverbundwerkstoff, verwendet werden können. In allen Figuren sind gleichlautende Elemente mit den gleichen Bezugszeichen gekennzeichnet.

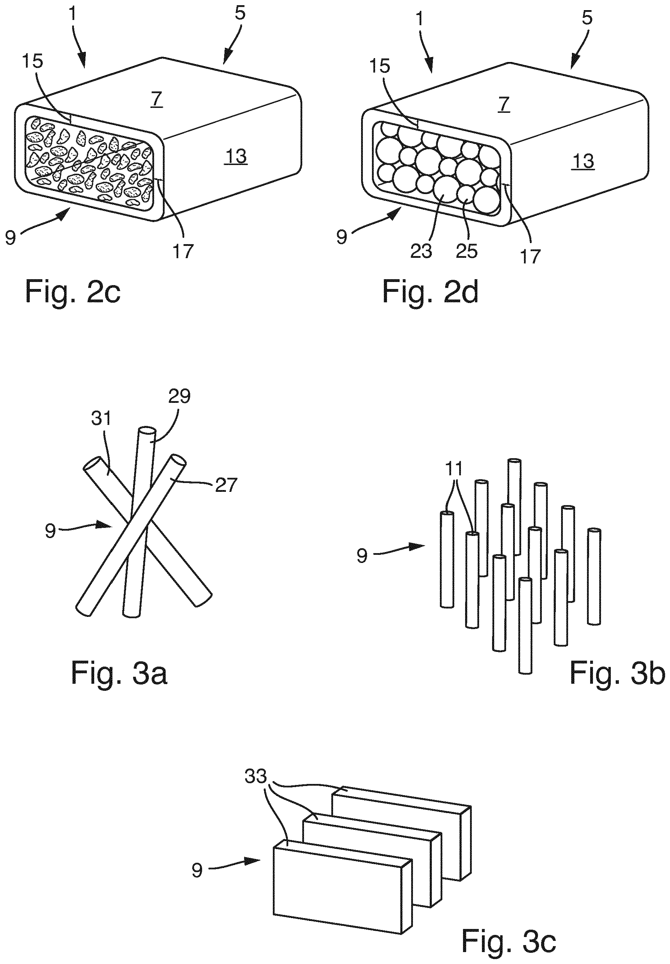

Die Verwendung der Werkzeuge 1 aus Figur 1a und mehrerer zusätzlicher Werkzeuge 1 bei der Konsolidierung eines Bauteils 3 aus einem Faserverbundwerkstoff ist in Figur 1b gezeigt. Der Faserverbundwerkstoff ist aus einer Matrix gebildet, in die Verstärkungsfasern eingebettet sind. Die Matrix in dem in Figur 3 dargestellten Beispiel ist aus einem thermoplastischen Kunststoff gebildet, der sich beispielsweise bei einer Temperatur von 400°C konsolidieren lässt. Eine derartige Matrix wird vorliegend auch als Thermoplastmatrix bezeichnet.

Die Werkzeuge 1 weisen jeweils mindestens eine erste Anlagefläche auf, mit der sie an dem zu konsolidierenden Bauteil anliegen. Die Details des Aufbaus der Werkzeuge werden nachfolgend unter Bezugnahme auf die Figuren 2a bis 2d und 3a bis 3c näher beschrieben, in denen beispielhafte Ausführungsformen von erfindungsgemäßen Werkzeugen und beispielhafte innere Strukturen gezeigt sind.

Schließlich ist in Figur 1c das Bauteil 3 aus Figur 1b nach der Konsolidierung gezeigt. Bei dem beispielhaften Bauteil 3 handelt es sich um eine Verstärkung für eine Türöffnung in einem Flugzeugrumpf.

Die Figuren 2a bis 2d zeigen Schnittansichten von vier verschiedenen Ausführungsformen eines Werkzeugs 1, das jeweils zur Verwendung bei der Konsolidierung eines Bauteils aus einem Faserverbundwerkstoff mit einer Thermoplastmatrix vorgesehen sind. Allerdings können die Werkzeuge 1 grundsätzlich auch bei der Konsolidierung eines Bauteils aus einem Faserverbundwerkstoff mit einer Thermosetmatrix angeordnet verwendet werden.

Das in Figur 2a gezeigte Werkzeug 1 umfasst eine äußere Umhüllung 5, die auch als äußere Hülle 5 bezeichnet wird. Die äußere Umhüllung 5 weist eine erste Kontaktfläche 7 auf. Die erste Kontaktfläche 7 liegt während der Konsolidierung eines Bauteils aus einem Faserverbundwerkstoff flächig an dem Bauteil an und gibt die Form des Bauteils zumindest abschnittsweise vor. Mit anderen Worten wird die äußere Gestalt des Bauteils während der Konsolidierung zumindest teilweise an die Form der ersten Kontaktfläche 7 angeglichen.

Die äußere Umhüllung 5 bildet ein Gehäuse, in dem eine innere Struktur 9 angeordnet ist. In dem in Figur 2a dargestellten Ausführungsbeispiel wird die innere Struktur 9 von einer Vielzahl von sich parallel zueinander erstreckenden, zylindrischen Rundstäben 11 gebildet. Von den Rundstäben 11, die in Figur 2a gezeigt sind, wurden lediglich zwei mit dem Bezugszeichen 11 gekennzeichnet, um die Erkennbarkeit der Darstellung der Ausführungsform nicht über die Maßen zu erschweren. Die Rundstäbe 11 erstrecken sich im Wesentlichen senkrecht zu der ersten Anlagefläche 7. Die innere Struktur 9 des Werkzeugs 1 in Figur 2a ist so ausgestaltet, dass sich bei einer Erwärmung des Werkzeugs 1 von Raumtemperatur als beispielhafte Ausgangstemperatur auf eine Konsolidierungstemperatur von beispielsweise 400 °C in erster Linie senkrecht zur ersten Anlagefläche 7 ausdehnt. Damit kann ein definierter erster Druck auf das Bauteil bzw. den Abschnitt des Bauteils ausgeübt werden, der an der ersten Anlagefläche 7 anliegt. Durch die Ausgestaltung der inneren Struktur 9 und insbesondere durch die Verwendung einer inneren Struktur 9, die sich im Wesentlichen senkrecht zur ersten Anlagefläche 7 erstreckt, wird vornehmlich Druck in Richtung der ersten Anlagefläche 7 ausgeübt.

Neben der ersten Anlagefläche 7 weist das Werkzeug 1 zudem eine zweite Anlagefläche 13 auf, die ebenfalls zur Anlage an einem Abschnitt des zu kollidierenden Bauteils vorgesehen ist. Wie man in Figur 2a erkennen kann, weist die äußere Umhüllung 5 im Bereich der ersten Anlagefläche 7 senkrecht zur Anlagefläche 7 eine größere Dicke 15 auf als im Bereich der zweiten Anlagefläche 13, wo die äußere Umhüllung 5 im Umkehrschluss eine geringere Dicke 17 aufweist. Das Werkzeug 1 ist somit dazu eingerichtet, über die erst Anlagefläche 7 einen größeren Druck auf ein zu konsolidierendes Bauteil auszuüben als über die zweite Anlagefläche 13. Nicht nur aufgrund der inneren Struktur 9 dehnt sich das Werkzeug 1 senkrecht zur ersten Anlagefläche 7 stärker aus als senkrecht zur zweiten Anlagefläche 13, sondern auch aufgrund der größeren Dicke 15 im Bereich der ersten Anlagefläche 7. Umgekehrt bewirkt die dünnere äußere Umhüllung 5 im Bereich der zweiten Anlagefläche 13, dass durch die zweite Anlagefläche 13 bei Erwärmung auf die Konsolidierungstemperatur deutlich weniger Druck auf das Bauteil ausgeübt wird als durch die erst Anlagefläche 7.

Damit hat die in Figur 2a gezeigte Ausführungsform den Vorteil, dass sich über die innere Struktur 9 der durch die erste Anlagefläche 7 ausgeübte Druck genau einstellen lässt und das über die erste und die zweite Anlagefläche aufgrund der inneren Struktur 9 und der unterschiedlichen Dicken 15, 17 der äußeren Umhüllung 5 im Bereich der jeweiligen Anlageflächen 7 ebenfalls unterschiedliche Drücke ausgeübt werden.

Figur 2b zeigt ein zweites Ausführungsbeispiel eines Werkzeugs 1 gemäß der vorliegenden Erfindung. Auch dieses Werkzeug 1 umfasst eine äußere Umhüllung 5 und eine innere Struktur 9. Wie das in Figur 2a dargestellte Ausführungsbeispiel, weist das Werkzeug 1 aus Figur 2b neben der ersten Anlagefläche 7 noch eine zweite Anlagefläche 13 auf, die ebenfalls zur Anlage an einem Abschnitt eines zu konsolidierenden Bauteils aus einem Faserverbundwerkstoff vorgesehen ist. Sowohl im Bereich der ersten Anlagefläche 7 als auch im Bereich der zweiten Anlagefläche 13 umfasst die äußere Umhüllung 5 jeweils zwei Schichten 19, 21 aus Materialien mit unterschiedlichen Wärmeausdehnungskoeffizienten. Beispielsweise weist das Material der ersten Schicht 19 einen größeren Wärmeausdehnungskoeffizienten auf als das Material der zweiten Schicht 21. Die äußere Umhüllung 5 unterscheidet sich im Bereich der ersten und der zweiten Anlagefläche 7, 13 jedoch in dem Anteil, denen die erste und die zweite Schicht 19, 21 an der Dicke 15, 17 der äußeren Umhüllung 5 einnehmen. Über die unterschiedlichen Anteile der Materialien mit unterschiedlichen Wärmeausdehnungskoeffizienten lässt sich die Ausdehnung der äußeren Umhüllung 5 und damit der von den jeweiligen Anlageflächen 7, 13 ausgeübte Druck auf vorteilhafte Weise einstellen.

Die innere Struktur 9 des in Figur 2b dargestellten Ausführungsbeispiel ist gitterartig und sorgt für eine gleichmäßige Verteilung des Drucks über die erste und die zweite Anlagefläche 7,13 auf das zu konsolidierende Bauteil.

Eine weitere Ausführungsform eines erfindungsgemäßen Werkzeugs 1 ist in Figur 2c dargestellt. Diese Ausführungsform unterscheidet sich von der in Figur 2a dargestellten Ausführungsform in der Ausgestaltung der inneren Struktur 9. Während in Figur 2a eine regelmäßige Struktur verwendet wird, umfasst das Werkzeug 1 in Figur 2c eine bionische innere Struktur 9, durch die sich komplexere Druckverteilungen über die erste Anlagefläche 7 und die zweite Anlagefläche 13 auf ein zu konsolidierendes Bauteil ausüben lassen, wenn das Werkzeug 1 von einer Ausgangstemperatur auf die Konsolidierungstemperatur erwärmt wird.

Schließlich ist in Figur 2d ein viertes Ausführungsbeispiel eines erfindungsgemäßen Werkzeugs 1 dargestellt. Dieses Ausführungsbeispiel unterscheidet sich von dem in den Figuren 2a und 2b dargestellten Ausführungsformen ebenfalls in der inneren Struktur 9. Diese besteht aus einer Kugelpackung mit Kugeln 23, 25, wobei die Kugeln entweder von einem ersten Kugeltyp (Kugeln 23) oder einem zweiten Kugeltyp (Kugeln 25) sind. Um die Erkennbarkeit der Darstellung in Figur 2b nicht zu erschweren, sind lediglich zwei der Kugeln 23, 25 der inneren Struktur 9 - von jedem Kugeltyp eine - mit Bezugszeichen versehen.

Die Kugel 23, 25 des ersten und des zweiten Kugeltyps unterscheiden sich zum einen in den Abmessungen, zum anderen aber auch in dem Material, aus dem sie gebildet sind. Zum Beispiel können die Kugel 23 des ersten Kugeltyps aus einem Material mit einem größeren Wärmeausdehnungskoeffizient gebildet werden als die Kugel 25 des zweiten Kugeltyps. Mit anderen Worten ist die innere Struktur 9 des Werkzeugs 1 in Figur 2d aus zwei verschiedenen Materialien gebildet, wobei die zwei verschiedenen Materialien jeweils verschiedene Wärmeausdehnungskoeffizienten aufweisen. Durch die Anordnung der Kugeln 23, 25 kann der Druck variiert werden, der über die erste Anlagefläche 7 und die zweite Anlagefläche 13 auf ein zu konsolidierendes Bauteil ausgeübt wird. Insbesondere kann über die erste Anlagefläche 7 ein anderer Druck auf das Bauteil ausgeübt werden als über die zweite Anlagefläche 13, da sich die Kugeln 23 des ersten Kugeltyps unterschiedlich stark bei Erwärmung auf die Konsolidierungstemperatur ausdehnen als die Kugeln 25 des zweiten Kugeltyps.

Schließlich sind in den Figuren 3a, 3b und 3c drei verschiedene Beispiele für innere Strukturen 9 von Werkzeugen 1 dargestellt, wobei die inneren Strukturen 9 die jeweiligen dargestellten Beispiele mehrfach oder auch nur teilweise umfassen können. Figur 3a zeigt eine erste Ausführungsform, bei der die innere Struktur 9 drei gekreuzte Rundstäbe 27, 29, 31 aufweist. Diese Ausführungsform hat den Vorteil, dass Druck in erster Linie entlang der Erstreckungsrichtung eines zentralen Rundstabes 29 aufgebaut wird, gleichzeitig aber auch Druck durch geneigte Rundstäbe 27, 31 senkrecht zu der Erstreckungsrichtung erzeugt werden kann. Aufgrund der Neigung der geneigten Rundstäbe 27, 31 relativ zu dem zentralen Rundstab 29, ist dieser Druck aber geringer.

Figur 3b zeigt einen Ausschnitt der inneren Struktur 9 aus Figur 2a, bei dem sich eine Vielzahl von Rundstäben 11 parallel zueinander erstrecken. Auch hier sind nur einige der Rundstäbe 11 mit Bezugszeichen gekennzeichnet. Durch diese innere Struktur 9 wird lediglich Druck in eine Richtung erzeugt.

Zuletzt zeigt Figur 3c eine Ausführungsform, bei der die innere Struktur 9 drei parallel zueinander angeordnete Quader 33 umfasst. Auch die Quader 33 dehnen sich bei Erwärmung von der Ausgangs- auf die Konsolidierungstemperatur aus. Da die Ausdehnung jeweils von der Materialstärke der Quader 33 abhängt, kann über diese innere Struktur 9 in drei Richtungen unterschiedlich viel Druck auf ein Bauteil ausgeübt werden, dass an entsprechenden Anlageflächen anliegt.

Die Werkzeuge 1 einschließlich der inneren Strukturen 9 und der äußeren Umhüllungen 5 werden vorzugsweise mit einem generativen Schichtaufbauverfahren, wie beispielsweise 3D-Druck hergestellt.

## Patentansprüche

1. Ein Werkzeug (1) zur Verwendung bei einer Konsolidierung eines faserverstärkten Bauteils (3),
wobei das Werkzeug (1) eine äußere Umhüllung (5) aufweist, die von einer inneren Struktur (9) gestützt wird,
wobei die äußere Umhüllung (5) eine erste Anlagefläche (7) aufweist, die dazu vorgesehen ist, während der Konsolidierung des Bauteils (3) flächig an dem Bauteil (3) anzuliegen und eine Form des Bauteils (3) abschnittsweise vorzugeben,
wobei die innere Struktur (9) und die äußere Umhüllung (5) so ausgestaltet sind, dass sich das Werkzeug (1) bei einer Erwärmung des Werkzeugs (1) von einer Ausgangstemperatur auf eine zur Konsolidierung des Bauteils (3) benötigte Konsolidierungstemperatur senkrecht zur ersten Anlagefläche (7) derart ausdehnt, dass durch die erste Anlagefläche (7) ein definierter erster Druck auf das Bauteil (3) ausgeübt wird.

2. Werkzeug (1) nach Anspruch 1, wobei die innere Struktur (9) zumindest abschnittweise aus unterschiedlichen Materialien mit verschiedenen Wärmeausdehnungskoeffizienten gebildet ist, wobei die Ausdehnung des Werkzeugs (1) senkrecht zur ersten Anlagefläche (7) bei der Erwärmung des Werkzeugs (1) von der Ausgangstemperatur auf die Konsolidierungstemperatur von den unterschiedlichen Materialien der inneren Struktur (9) abhängt.

3. Werkzeug (1) nach Anspruch 1 oder 2, wobei die äußere Umhüllung (5) im Bereich der ersten Anlagefläche (7) aus mehreren Schichten (19, 21) gebildet ist, die sich parallel zur Anlagefläche (7) erstrecken, wobei zumindest zwei der mehreren Schichten (19, 21) aus unterschiedlichen Materialien gebildet sind, die verschiedene Wärmeausdehnungskoeffizienten aufweisen, so dass die Ausdehnung des Werkzeugs (1) senkrecht zur ersten Anlagefläche (7) bei der Erwärmung des Werkzeugs (1) von der Ausgangstemperatur auf die Konsolidierungstemperatur von den unterschiedlichen Materialien der äußeren Umhüllung (5) und einer Dicke der Schichten (19, 21) senkrecht zur ersten Anlagefläche (7) abhängt.

4. Werkzeug (1) nach Anspruch 1 oder 2, wobei die äußere Umhüllung (5) eine zweite Anlagefläche (13) aufweist, die dazu vorgesehen ist, während der Konsolidierung des Bauteils (3) flächig an dem Bauteil (3) anzuliegen und eine Form des Bauteils (3) abschnittsweise vorzugeben,
wobei die innere Struktur (9) und die äußere Umhüllung (5) so ausgestaltet sind, dass sich bei der Erwärmung des Werkzeugs (1) von der Ausgangstemperatur auf die Konsolidierungstemperatur das Werkzeug (1) senkrecht zur zweiten Anlagefläche (7) derart ausdehnt, dass durch die zweite Anlagefläche (13) ein definierter zweiter Druck auf das Bauteil (3) ausgeübt wird, wobei der erste Druck und der zweite Druck unterschiedlich groß sind.

5. Werkzeug (1) nach Anspruch 4, wobei die äußere Umhüllung (5) im Bereich der ersten Anlagefläche (7) senkrecht zur ersten Anlagefläche (7) eine Dicke (15) aufweist, die von einer Dicke (17) der äußeren Umhüllung (9) senkrecht zur zweiten Anlagefläche (13) im Bereich der zweiten Anlagefläche (13) abweicht, so dass sich das Werkzeug (1) aufgrund der unterschiedlichen Dicke der äußeren Umhüllung (5) und der sich daraus ergebenden unterschiedlichen resultierenden Kraft der thermalen Dehnung im Bereich der ersten und der zweiten Anlagefläche (7, 13) bei einer Erwärmung von der Ausgangstemperatur auf die Konsolidierungstemperatur senkrecht zur ersten Anlagefläche (7) unterschiedlich stark ausdehnt als senkrecht zur zweiten Anlagefläche (13).

6. Werkzeug (1) nach Anspruch 4 oder 5, wobei die innere Struktur (9) aus unterschiedlichen Materialien mit verschiedenen Wärmeausdehnungskoeffizienten gebildet ist, so dass sich das Werkzeug (1) aufgrund der Materialien mit unterschiedlichen Wärmeausdehnungskoeffizienten bei einer Erwärmung von der Ausgangstemperatur auf die Konsolidierungstemperatur senkrecht zur ersten Anlagefläche (7) unterschiedlich stark ausdehnt als senkrecht zur zweiten Anlagefläche (13).

7. Werkzeug (1) nach einem der vorhergehenden Ansprüche, wobei die innere Struktur (9) und/oder die äußere Umhüllung (5) mit einem generativen Fertigungsverfahren hergestellt worden sind.

8. Werkzeug (1) nach einem der vorhergehenden Ansprüche, wobei das Werkzeug (1) zur Verwendung bei einer Konsolidierung eines faserverstärkten Bauteils (3) mit einer Matrix aus einem thermoplastischen Material vorgesehen ist.

9. Verwendung eines Werkzeugs (1) nach einem der vorhergehenden Ansprüche bei einer Konsolidierung eines faserverstärkten Bauteils (3).

10. Verwendung nach Anspruch 9, wobei das Werkzeug (1) zur Konsolidierung eines faserverstärkten Bauteils (3) mit einer Matrix aus einem thermoplastischen Material verwendet wird.
